Europäisches Patentamt

European Patent Office

Office européen des brevets

(19)

(11) Veröffentlichungsnummer : **0 445 198 B1**

# (12) EUROPÄISCHE PATENTSCHRIFT

(45) Veröffentlichungstag der Patentschrift :
28.10.92 Patentblatt 92/44

(51) Int. Cl.$^5$ : **A43B 7/12,** A43B 9/16

(21) Anmeldenummer : 90900132.3

(22) Anmeldetag : 28.11.89

(86) Internationale Anmeldenummer :
PCT/EP89/01444

(87) Internationale Veröffentlichungsnummer :
WO 90/06067 14.06.90 Gazette 90/14

(54) SCHUH - STICHWORT: KUNSTSTOFFZWICKRAND.

(30) Priorität : 28.11.88 DE 3840087

(43) Veröffentlichungstag der Anmeldung :
11.09.91 Patentblatt 91/37

(45) Bekanntmachung des Hinweises auf die
Patenterteilung :
28.10.92 Patentblatt 92/44

(84) Benannte Vertragsstaaten :
AT CH DE FR IT LI

(56) Entgegenhaltungen :
EP-A- 0 284 638
US-A- 4 599 810
US-A- 4 819 345

(73) Patentinhaber : LOWA-SCHUHFABRIK
LORENZ WAGNER GmbH & Co. KG
Hauptstrasse 16
W-8069 Jetzendorf (DE)

(72) Erfinder : HAIMERL, Franz
Kohlstattstrasse 14
W-8069 Jetzendorf (DE)

(74) Vertreter : Weickmann, Heinrich, Dipl.-Ing. et
al
Patentanwälte H. Weickmann, Dr. K. Fincke
F.A. Weickmann, B. Huber Dr. H. Liska, Dr. J.
Prechtel Kopernikusstrasse 9 Postfach86 08
20
W-8000 München 86 (DE)

## Beschreibung

Die Erfindung betrifft einen Schuh mit einem Schaft, einer mit dem Schaft verbundenen Brandsohle, einer mit dem Schaft verbundenen Sohlenkonstruktion und einem im wesentlichen wasserdichten Futter,

wobei der aus einem Material höherer Wasserleitfähigkeit bestehende Schaft einen mit ihm zusammenhängenden Randstreifen aus einem Material geringerer oder fehlender Wasserleitfähigkeit besitzt, der mit der Brandsohle verbunden ist und unter Vermittlung einer dichtenden Masse an dem wasserdichten Futter wasserdicht anliegt und

wobei die Sohlenkonstruktion mindestens eine in sich wasserdichte Schicht aufweist, die mit der Aussenseite des Randstreifens wasserdicht verbunden ist.

Moderne Futterstoffe, wie sie z.B. unter dem Warenzeichen Goretex auf dem Markt sind, erlauben die wasserdichte Auskleidung von Schuhen ohne die Dampfdurchlässigkeit zu behindern. Grundsätzlich sind zwei Systeme bekannt. Bei einem ersten System wird ein vollständiger Socken in den Schuh eingesetzt oder fest eingebaut.

Bei einem weiteren System wird nur der Schaftbereich mit dem Futter ausgekleidet und durch Anschluß des Futters an eine Dichtungskonstruktion im Sohlenbereich die Wasserdichtigkeit vervollständigt. Die vorliegende Erfindung befaßt sich mit dem letztgenannten System.

Aus der deutschen Patentschrift 37 12 901 ist es bekannt, das Futtermaterial an der Unterseite der Brandsohle über den Zwickrand des Schafts hinaus fortzusetzen und dort in eine wasserdichte Schicht einzubetten, welche an der Unterseite der Brandsohle aufgespritzt wird und damit eine dichte Fortsetzung des Futters im Sohlenbereich bildet.

Bei einer ersten Ausführungsform dieser Patentschrift wird der Schaft aus einem Laminat mit einer Außenschicht einer dampfdurchlässigen Membran als Mittelschicht und einer Innenschicht gebildet. An der Innenseite der Innenschicht ist ggf. noch ein Auskleidungsfutter vorgesehen. Das Laminat untergreift die Brandsohle. Im Randbereich der Brandsohle ist das Laminat über seine Innenschicht an der Brandsohle im AGO-Verfahren festgezwickt. Ein überstehender Bereich des Laminats liegt unterhalb der Brandsohle und wird dort in ein Dichtmaterial eingebettet, das auf die Unterseite der Brandsohle aufgespritzt wird. Diese Ausführungsform ist nur zur Herstellung von Spezialschuhen geeignet, bei denen das Obermaterial, die wasserdichte Membran und das Innenmaterial ein Laminat bilden. Die Verbindung zwischen dem Obermaterial und der Brandsohle wird unter Vermittlung der wasserdichten Membran und der Innenschicht hergestellt, so daß alle mechanischen Zugbelastungen bei der Herstellung und im Betrieb durch den Schichtaufbau des Laminats hindurch übertragen werden müssen.

Bei einer anderen Ausführungsform nach dieser Patentschrift kann als Obermaterial ein Leder verwendet werden. Das wasserdichte Futter ragt dabei unterhalb der Brandsohle über den Rand des , Leders hinaus in ein Dichtmaterial hinein, das wiederum auf die Umerseite der Brandsohle aufgespritzt ist. Unklar bleibt dabei, wie die mechanische Verbindung des Obermaterials mit der Brandsohle hergestellt werden soll. Wenn wiederum an eine Laminatverbindung zwischen dem Obermaterial und dem wasserdichten Futter gedacht ist, so bleibt wiederum das Problem, daß alle an dem Obermaterial auftretenden Zugkräfte, gleichgültig ob beim Zwicken und beim Gebrauch, zwischen der Brandsohle und dem Obermaterial ausschließlich durch den Schichtverbund hindurch übertragen werden können.

Aus der deutschen Gebrauchsmusterschrift 87 17 201 ist ein Schuh bekannt, bei dem das Schaftmaterial mit einem sohlennahen Randstreifen vernäht ist, der aus einem löchrigen oder porösen Material besteht, beispielsweise einem Netzmaterial aus Kunstfaser mit einer Maschengröße von etwa 1,5 mm, wobei die Fäden des Netzmaterials monofile Fäden sein können, insbesondere monofile Polyamid- oder Polyesterfäden. Das Schaftmaterial ist auf seiner Innenseite mit einer wasserdichten Membran ausgekleidet, welche ihrerseits mit einer Textilschicht auf ihrer dem Fuß zugekehrten Innenseite und auch mit einer Textilschicht auf ihrer dem Schaftmaterial zugekehrten Außenseite beschichtet ist. Die so beschichtete Membran wird zusammen mit dem aus Netzmaterial gebildeten Randstreifen mit der Brandsohle vernäht. Anschließend wird eine Sohle aus wasserdichtem Kunststoff angespritzt, wobei der Schalenrand der Sohle den Randstreifen bedeckt. Beim Spritzen soll das zunächst flüssige Sohlenmaterial durch die Poren und Löcher des netzartigen Randstreifens hindurch auf die Außenseite des Futtermaterials vordringen.

Aus der EP-A1-284 638 ist weiterhin ein Schuh bekannt, dessen Schaft aus einem äußeren Schaftmaterial, einer auf der Innenseite des Schaftmaterials aufgebrachten Teflonmembran sowie einem die Teflonmembran nach innen abdeckenden Futter besteht. Bei der Herstellung dieses Schuhs wird der in konventioneller Weise hergestelle Schaft an seinen Enden um die Brandsohle umgeschlagen und an dieser durch Kleben und/oder Nageln befestigt. Auf das umgeschla-Ende des Schafts wird eine Zwischensohle aufgebracht, die aus einer Ausbaumasse und einer dünnen Gummischicht besteht. Die Ausbaumasse wird mittels Druck und Wärme mit der Brandsohle verklebt, um Beschädigungen des Schafts, die von der Befestigung herrühren, auszufüllen und Unebenheiten, die durch das umgeschlagene Ende auf der Brandsohle entstanden sind, auszugleichen. Auf die Zwischensohle wird dann die Laufsohle aufgeklebt. Mit dieser Herstellungsweise soll erreicht werden, daß der Schuh waserdicht abgeschlossen wird und die Laufsohle keinerlei Dichtungseigenschaften mehr zu übernehmen braucht.

Bei dieser bekannten Konstruktion reicht das Schaftmaterial selbst und unverändert in den Bereich zwischen Brandsohle und Laufsohle hinein. Wenn das Schaftmaterial wasserführend ist, also z.B. aus wasserführendem Leder oder Textilwerkstoff besteht, so bedeutet dies, daß eine wasserführende Schicht in den Zwischenraum zwischen Brandsohle und Laufsohle hineinreicht. Selbst wenn man unterstellt, daß die Ausbaumasse wasserdicht ist und das weitere Vordringen des durch das Schaftmaterial eingeleiteten Wassers unterbindet, so bleibt es dennoch äußerst unerwünscht, daß durch Kapillarwirkung des Schaftmaterials ständig Wasser in den Zwischenraum zwischen Brandsohle und Laufsohle eindringen kann. Dieses Wasser kann zu einer raschen Verrottung des zwischen Brandsohle und Laufsohle liegenden umgeschlagenen Endes des Schaftmaterials führen. Weiterhin setzt das bekannte Verfahren, bei dem die Ausbaumasse mittels Druck und Wärme an der Brandsohle angebracht wird, notwendigerweise das Vorhandensein einer Form voraus, die dem Einbringen der Ausbaumasse dient, so daß der Schuhhersteller in der Auswahl der Verfahrensschritte eingeschränkt ist.

Ausgehend von einem Schuh, wie er eingangs definiert ist, liegt der Erfindung die Aufgabe zugrunde, die Wasserdichtigkeit des Schuhs noch zu verbessern und eine weite Vielfalt von Herstellungsverfahren zuzulassen.

Zur Lösung dieser Aufgabe wird erfindungsgemäß vorgeschlagen, daß der Randstreifen aus einem Material besteht, welches bereits vor der Verbindung mit der Sohlenkonstruktion eine geringere oder fehlende Wasserleitfähigkeit besitzt und daß zwischen dem Randstreifen und dem Futter eine von der Anbringung der Sohlenkonstruktion unabhängige Dichtmittelschicht eingebracht ist.

Die Unabhängigkeit der Dichtmittelschicht von der Sohlenkonstruktion erlaubt es, zwischen dem Randstreifen und dem wasserdichten Futter das jeweils optimale Dichtmittel einzubringen, ohne daß bei der Auswahl des Dichtmittels Rücksicht auf dessen Materialverhalten als Sohlenkonstruktion genommen werden muß. Dies steht in deutlichem Gegensatz zu der bekannten Lösung nach der deutschen Gebrauchsmusterschrift 87 17 201, bei welcher man kompromißweise ein Material anspritzen muß, welches einerseits als Sohlenmaterial geeignet ist und andererseits geeignet ist, um den netzartigen Randstreifen in sich abzudichten und eine dichte Verbindung mit dem wasserdichtem Futter herzustellen. Weiterhin wird durch die von der Sohlenkonstruktion unabhängige Einbringung der Dichtmittelschicht die Auswahl der Herstellungsverfahren erweitert. Man ist nicht mehr an das Anspritzen der Sohle gebunden, man kann vielmehr die Sohlenkonstruktion auf beliebige Weise anbringen, je nach den besonderen Anforderungen an das Schuhwerk und je nach den fabrikatorischen Möglichkeiten des Herstellerbetriebs. Es sei aber bemerkt, daß auch bei dem erfindungsgemäßen Schuh das Anspritzen der Sohlenkonstruktion nicht ausgeschlossen sein soll.

Während bei dem aus der deutschen Gebrauchsmusterschrift bekannten Schuh der Randstreifen netzförmig sein muß, um von dem angespritzten Sohlenmaterial durchdrungen zu werden, ist es bei dem erfindungsgemäßen Schuh möglich, einen Randstreifen zu verwenden, der schon vor dem Anbringen der Sohlenkonstruktion eine gegenüber dem Schaftmaterial geringe oder gar keine Wasserleitfähigkeit und keine Wasserdurchlässigkeit besitzt. Dies ist ein großer Vorteil, weil dadurch insgesamt die Wasserdichtigkeit des Schuhs verbessert wird. Man ist nämlich nicht mehr, wie bei dem aus der deutschen Gebrauchsmusterschrift bekannten Produkt, davon abhängig, daß das angespritzte Sohlenmaterial eine absolut dichte Verbindung mit dem Netzmaterial des Randstreifens eingeht, dieses Netzmaterial wasserunleitfähig macht und nach dem Durchtritt durch das Netzmaterial eine dichte Verbindung mit dem wasserdichten Futtermaterial eingeht.

Der Randstreifen kann aus einer weiten Vielfalt von Materialien hergestellt werden, wesentlich ist nur, daß das Randstreifenmaterial von Haus aus wasserdicht und nicht wasserführend ist und daß es beim Zwicken, d.h. beim Befestigen an der Brandsohle, die Zugkräfte übertragen kann, welche in der mechanischen Fertigung von Zangen ausgeübt werden, um das Schaftmaterial über einen Leisten zu spannen und den Randstreifen an die Sohle des Leistens anzudrücken.

Weiterhin muß das Randstreifenmaterial soweit flexibel und räumlich verformbar sein, daß es sich an die Übergangskrümmung zwischen der Umfangsfläche des Leistens und der Sohlenfläche des Leistens anpassen läßt.

Es stehen eine Vielzahl von Materialien zur Verfügung, welche diese Forderungen an das Randstreifenmaterial erfüllen. All diese verfügbaren Materialien können, da sie nicht mehr von dem Sohlenmaterial durchdringbar sein müssen, wie es in der deutschen Gebrauchsmusterschrift gefordert wird, eine ausreichende Zugfestigkeit aufweisen, um die bei der Vereinigung mit der Brandsohle auftretenden Kräfte aufnehmen zu können.

Der Randstreifen kann insbesondere aus einer Kunststoff-Folie oder einem Kunststoff-Laminat bestehen, beispielsweise einem Laminat, welches aus einer Gewebeschicht und einer Kunststoffbeschichtung auf beiden Seiten der Gewebeschicht besteht. Dabei wählt man als Gewebeschicht vorzugsweise eine aus monofilen Synthese-Fäden aufgebaute Gewebeschicht und als Kunststoffbeschichtung einen Polyurethan-Kunststoff.

Der Randstreifen kann weiter auf der Basis eines Faservlieses hergestellt sein, welches vor der Verbindung mit der Sohlenkonstruktion und vorzugsweise schon vor der Verbindung mit dem Schaftmaterial mit einem die Wasserleitfähigkeit unterdrückenden Imprägniermittel imprägniert wurde.

Der Randstreifen kann unabhängig von dem Schaftmaterial hergestellt und nachträglich mit dem Schaftmaterial verbunden, insbesondere vernäht werden, etwa so, daß der Randstreifen mit dem Schaftmaterial stumpf zusammenstößt oder das Schaftmaterial an der Verbindungsstelle überlappt. Bei Überlappung ist es zweckmäßig, das Randstreifenmaterial aussenseitig an das Schaftmaterial anzulegen.

Es ist aber grundsätzlich auch möglich, daß der Randstreifen integral mit dem Schaftmaterial zusammenhängt und vor der Verbindung mit der Sohlenkonstruktion mit einem die Wassleitfähigkeit unterdrückenden Imprägniermittel imprägniert wird. Dabei ist es gleichgültig, aus welchem Material der Schaft besteht. Man kann den Randbereich eines Lederschafts imprägnieren, aber auch den Randbereich eines Textilschafts. Wesentlich ist, daß nur der Randbereich des Schafts imprägniert wird, um Veränderungen des Schaftmaterials in seinem oberen Bereich zu vermeiden, die für die Trageigenschaften und für die Verarbeitungseigenschaften des Schaftmaterials von Nachteil sein könnten. So wird man beispielsweise bei einem Lederschaft die ganzflächige Imprägnierung des Lederschafts, also auch die ausserhalb des Randstreifens liegenden Bereiche erfassende Imprägnierung, häufig ablehnen müssen, weil eine solche Imprägnierung einem Bedrucken und Verkleben des Schaftmaterials hinderlich sein könnte.

Es wird empfohlen, daß das Dichtmittel zwischen dem Randstreifen und dem wasserdichten Futter auf den Bereich des Randstreifens und ggf. einen schmalen Randbereich des Schaftmaterials längs der Verbindungslinie zwischen dem Schaftmaterial und dem Randstreifen beschränkt bleibt. Man will nämlich eine Haftverbindung zwischen dem wasserdichten Futter und dem oberen Bereich des Schaftmaterials vermeiden, um eine Belüftung des Zwischenraums zwischen Schaftmaterial und wasserdichtem Futter zu ermöglichen und insbesondere zu ermöglichen, daß in diesen Zwischenraum eingedrungene Feuchtigkeit ausgetrocknet werden kann. Um die unkontrollierte Verteilung des Dichtmaterials in dem Zwischenraum zwischen Schaftmaterial und wasserdichtem Futter zu vermeiden, wird empfohlen, daß das Dichtmittel durch eine Verklebungslinie nach oben begrenzt ist, d.h. eine Verklebungslinie zwischen dem wasserdichten Futter einerseits und dem Randstreifen und/oder dem Schaftmaterial andererseits. Diese Verklebungslinie braucht nur etwa 10 bis 15 mm breit zu sein und läßt sich beim Zusammenbau des Schaftmaterials mit dem wasserdichten Futter leicht dadurch herstellen, daß auf das Schaftmaterial und/oder das wasserdichte Futter ein Klebstoff aufgepinselt wird und die Schichten danach zusammengedrückt werden. Dann besteht unterhalb der Verklebungslinie ein Spaltraum geringer Tiefe, in dem das Dichtmittel so verteilt werden kann, daß es einerseits nicht unkontrolliert in den oberen Schaftbereich hinausfließt und andererseits eine vollwertige Dichtung bildet.

Als Dichtmittel kommen insbesondere Dichtmittel auf der Basis von Polyurethan, Polyvinylchlorid, Naturkautschuk oder Synthesekautschuk in Frage. Diese Dichtmittel können insbesondere in Pastenform oder weniger bevorzugt in flüssiger Form eingebracht werden. Die Pastenform sorgt dafür, daß die Stärke der Dichtmittelschicht bei der Weiterverarbeitung erhalten bleibt und keine undichten Stellen entstehen können. Beispielsweise sind 2-Komponenten-Polyurethan-Dichtmittel und feuchtigkeitshärtende Polyurethan-Dichtmittel geeignet. Im ausgehärteten Zustand sollte das Dichtmittel eine dauerelastische Konsistenz beibehalten, so daß die Dichtung auf die Dauer gewährleistet ist.

Ist das wasserdichte Futter auf seiner Außenseite mit der Textilschicht versehen, wie sie häufig zum Schutz wasserdichter Membranen gewünscht wird, so muß man dafür sorgen, daß das Dichtmittel die Textilschicht voll durchdringt und das Dichtmittel wasserdicht an dem wasserdichten Futter anliegt. Unter diesem Gesichtspunkt ist es vorteilhaft, wenn die Textilbeschichtung auf der Außenseite des wasserdichten Futters von monofilen Fäden gebildet ist, insbesondere monofilen Polyamid- oder Polyesterfäden. Oberhalb des Dichtmittels bzw. oberhalb der Verklebungslinie sollte das wasserdichte Futter lose an dem Schaftmaterial anliegen, so daß dort eine Hinterlüftung möglich ist und Druckstellen für den Fuß vermieden werden.

Wie schon weiter oben gesagt, erlaubt die erfindungsgemäße Schuhkonstruktion die verschiedensten Herstellungsarten.

So ist es möglich, daß der Randstreifen an der Unterseite der Brandsohle überlappend anliegt und im Überlappungsbereich mit der Brandsohle verbunden ist. Um zu verhindern, daß die zwischen dem Schaftmaterial und der Brandsohle bei der Herstellung und im Betrieb wirksamen Kräfte von dem Futtermaterial übertragen werden müssen, wird empfohlen, daß das Futter im Überlappungsbereich mit der Brandsohle vor dem Randstreifen endet und daß der Randstreifen im Überlappungsbereich mit der Brandsohle außerhalb des Futterrands mit der Brandsohle verbunden ist. Dabei kann der Randstreifen mit der Brandsohle insbesondere durch einen Schmelzkleber verbunden werden. Dies bedeutet, daß man das sogen. AGO-Zwickverfahren zur Herstellung des Schuhs verwenden kann, bei dem der Randstreifen mit Spannzangen erfaßt über einen Leisten gezogen und gegen die Brandsohle angedrückt wird, wobei zwischen Randstreifen und Brandsohle ein schnell härtender Schmelzkleber eingebracht wird. Dieser Schmelzkleber wird insbesondere deshalb gewählt, weil er in der Zwickmaschine rasch härtet, so daß die Verweilzeit des Schuhs beim Zwicken in der Zwickmaschine reduziert ist. Der Schmelzkleber selbst könnte eine wesentliche Dichtfunktion auf Dauer nicht übernehmen, da er nach Aushärtung im Gebrauch brüchig werden und dann Wasseraustrittsstellen bilden kann. Es ist also wesentlich, daß die Abdichtung von einem besonderen Dichtmittel und nicht etwa von dem beim AGO-Zwickverfahren angewandten Schmelzkleber übernommen wird.

Der Randstreifen kann mit der Brandsohle auch vernäht werden, etwa durch eine Strobelnaht, die im Rahmen eines Ausführungsbeispiels noch näher erläutert wird; dabei ist es unschädlich, wenn die Strobelnaht auch den Rand des Futters durchdringt.

Weiterhin kann der Randstreifen auch mit einer abwärts gebogenen Randzone der Bandsohle durch eine Steppnaht verbunden werden. Auch diese wird im Rahmen eines Ausführungsbeispiels näher erläutert. Auch hier ist es wiederum unschädlich, wenn die Steppstichnaht den Rand des wasserdichten Futters durchdringt.

Weiter kann der Randstreifen mit einer abwärts gerichteten Einstechlippe der Brandsohle vernäht werden. Auch dies wird im Rahmen eines Ausführungsbeispiels näher erläutert. Dabei ist es wiederum unschädlich, wenn die Naht das wasserdichte Futter und/oder einen Teil der Dichtmittelschicht durchdringt.

Weiter oben wurde schon darauf hingewiesen, daß die erfindungsgemäße Ausbildung eine weitergehende Wahlfreiheit bezüglich der Sohlenkonstruktion zuläßt.

So ist es möglich, daß die wasserdichte Schicht der Sohlenkonstruktion von einer Zwischensohle gebildet ist, die mit dem Randstreifen und ggf. auch mit dem Schaftmaterial selbst verklebt werden kann. Die Zwischensohle kann dabei als Schalensohle ausgebildet sein, d.h. als eine Schalensohle, welche bereits vor der Anbringung an dem Schuh Schalenform besitzt.

Weiterhin kann die wasserdichte Schicht der Schalenkonstruktion von einer wasserdichten Folie gebildet sein. Diese wasserdichte Folie kann ggf. wasserdampfdurchlässig sein, um eine gewisse Entdampfung auch im Sohlenbereich zu ermöglichen. Im Fall einer wasserdichten Folie kann der Aufbau etwa so sein, daß der Randstreifen die Unterseite der Brandsohle überlappt, daß ein der Sohlenmitte naher Bereich des Randstreifens mit der wasserdichten Folie dicht verklebt ist und daß ein der Sohlenmitte fernerer Bereich des Randstreifens mit einer Zwischensohle verklebt ist.

Das im wesentlichen wasserdichte Futter sollte dampfdurchlässig sein, um die Ansammlung von Wasserdampf innerhalb des Schuhs zu begrenzen. Die Funktion der Wasserdichtigkeit bei gleichzeitiger Dampfdurchlässigkeit wird beispielsweise von Folien aus gerecktem Polytetrafluoräthylen erfüllt oder auch von Polyestermembranen und mikroporösen Polyurethanschichten.

Um ein Eindringen von Wasser in den Schuh von außen optimal zu vermeiden wird empfohlen, daß das wasserdichte Futter bis in den Bereich des Einstiegrandes des Schuhs reicht und bis zu diesem Rand als dichter Sack ausgebildet ist.

Der Schuh selbst kann als hochschaftiger Schuh, insbesondere Sport- oder Wanderstiefel aber auch als Halbschuh ausgebildet sein.

Die Erfindung betrifft weiter ein Verfahren zur Herstellung eines Schuhs. Dieser Schuh umfaßt einen mit einer Brandsohle verbundenen Schaft, eine mit dem Schaft verbundene Sohlenkonstruktion und ein im wesentlichen wasserdichtes Futter, wobei der Schaft aus einem Material höherer Wasserleitfähigkeit besteht und mit einem Randstreifen aus einem Material geringerer oder fehlender Wasserleitfähigkeit zusammenhängt, wobei weiter der Randstreifen mit der Brandsohle verbunden ist, wobei weiter der Randstreifen unter Vermittlung einer dichtenden Masse an dem Futter wasserdicht anliegt und wobei die Sohlenkonstruktion mindestens eine an sich wasserdichte Schicht aufweist, die mit dem Randstreifen wasserdicht verbunden ist.

Dabei wird vorgeschlagen, daß man den Randstreifen aus nicht wasserleitfähigem Material an dem Schaftmaterial vorsieht, daß man zwischen den Randstreifen und das wasserdichte Futter die Dichtmasse in pastöser oder flüssiger Form einbringt, daß man den Randstreifen hierauf an der Brandsohle befestigt und daß man schließlich die wasserdichte Sohlenkonstruktion anbringt.

Bei diesem Verfahren kann das Anbringen des Dichtmittels dadurch erleichtert werden, daß man vor dem Einbringen des Dichtmittels zwischen dem wasserdichten Futter einerseits und dem Randstreifen und ggf. dem Schaftmaterial eine Klebelinie vorsieht und in den durch diese Klebelinie begrenzten Spalt das Dichtungsmittel einbringt.

Der Randstreifen kann dabei als gesondertes Teil hergestellt und mit dem Schaftmaterial verbunden werden; es ist aber auch möglich, daß man einen integralen Randstreifen des Schaftmaterials imprägniert.

Es ist nochmal darauf hinzuweisen, daß das Dichtmittel jedenfalls unterhalb der Grenze zwischen dem Schaftmaterial und dem wasserdichten Randstreifen vorgesehen sein muß. Es ist unschädlich, wenn das Dichtmittel über diese Grenze hinaus in den Bereich des Schafts übersteht. Man ist aber bemüht, die Ausdehnung der Dichtmittelschicht oberhalb der Grenze zwischen Randstreifen und Schaftmaterial möglichst zu beschränken, um in einem möglichst großen Bereich des Oberschuhs eine lose Anlage zwischen dem wasserdichten Futter und dem Schaftmaterial zu gewährleisten. Die Grenze zwischen dem Schaftmaterial und dem wasserdichten Randstreifen legt man möglichst tief ggf. sogar in den Bereich der Überlappung von Randstreifen und Brandsohle.

Die beiliegenden Figuren erläutern die Erfindung anhand von Ausführungsbeispielen; es stellen dar:

Fig. 1-8 Schnitte durch verschiedene Schuhkonstruktionen, welche auf der Verwirklichung des Erfindungsprinzips beruhen;

Fig. 1a einen Schnitt durch ein Schaftmaterial mit angenähtem Randstreifen, welcher aus einem Kunststoffmaterial gebildet ist.

Fig. 1b einen Schnitt durch ein Schaftmaterial, bei welchem der Randstreifen durch Randimprägnierung des Schaftmaterials selbst gebildet ist;

Fig. 9-11 verschiedene Fertigungsstadien beim Einbau der Dichtmittelschicht zwischen den Randstreifen und das wasserdichte Futter.

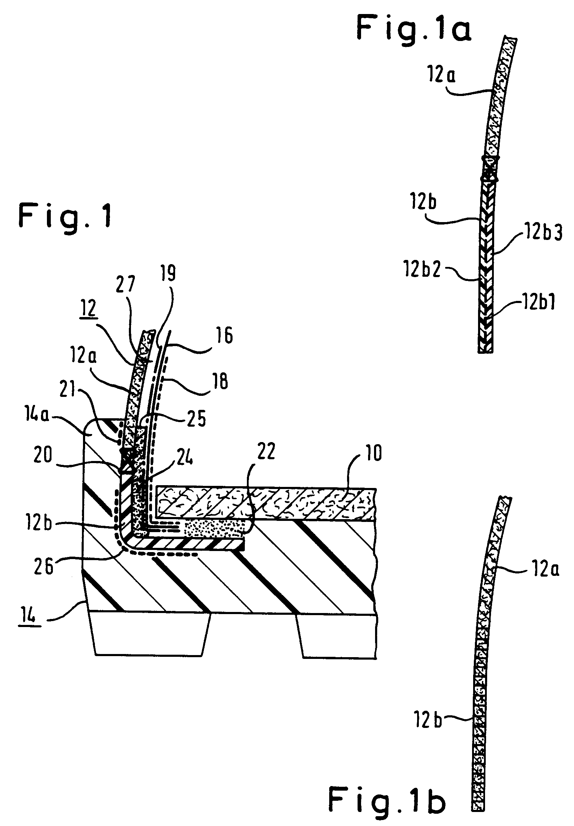

In Fig. 1 ist die Brandsohle mit 10 bezeichnet, der Schaft mit 12 und die Sohlenkonstruktion mit 14. An der Innenseite des Schafts liegt ein Goretex-Futter 16 mit innerer Textilbeschichtung 18 und äußerer Schutzbeschichtung 19 aus grobmaschigem Polyester- oder Polyamidgewebe an. Der Schaft 12 setzt sich zusammen aus einem Zuschnitt 12a aus Leder und einem Randstreifen 12b aus Kunststoff, beispielsweise PVC. Die Teile 12a und 12b sind stumpf gegeneinander gestoßen und durch eine Zickzacknaht 20 miteinander verbunden. Der Randstreifen 12b ist in herkömmlicher Weise bei 22 nach dem AGO-Verfahren mit der Brandsohle 10 verbunden, d.h. durch eine Schmelzkleberschicht 22 an der Brandsohle 10 festgeklebt. Das Futter 16 erstreckt sich bis an die Unterseite der Brandsohle 10, reicht aber vorzugsweise nicht bis in den Schmelzkleber 22 hinein, sodaß die unmittelbare Kraftübertragung zwischen dem Randstreifen 12b und der Brandsohle 10 durch den Schmelzkleber 22 hergestellt ist. Zwischen dem Futter 16 und dem Randstreifen 12b ist eine Polyurethan-Dichtmittelschicht 24 vorgesehen, die wasserdicht ist und wasserdicht an dem Randstreifen 12b und dem Futter 16 anhaftet. Die Schicht 24 durchdringt das Gewebe 19 und umschließt dessen monofile Fäden wasserdicht. Die Fäden haben ihrerseits keine Dochtwirkung. Das Futter 16 ist insbesondere eine Folie, wie sie unter der Handelsmarke Goretex angeboten wird. Die wasserdichte Sohle 14 deckt mit ihrem Rand 14a die Naht 20 ab. Die Sohle 14 ist mit dem Randstreifen 12b durch eine Klebung 26 wasserdicht verbunden und ist selbst aus wasserdichtem, gummiartigem Werkstoff hergestellt. Man erkennt, daß eine vollständige Abdichtung zur Brandsohle hin gewährleistet und daß insbesondere auch ein Eindringen von Wasser zur Brandsohle auf dem Weg des Schaftmaterials nicht möglich ist, weil das Schaftmaterial im Bereich des Randstreifens 12b nicht wasserführend ist. Weiterhin ist auch ausgeschlossen, daß Feuchtigkeit, welche den Materialbereich 12a durchdringt, in den Zwischenraum zwischen dem Schaft 12 und dem Futter 16 an die Brandsohle gelangt; dies wird durch die Dichtmasseschicht 24 verhindert. Die Sohle 14 kann auch angespritzt sein. Zum Schutz der Naht 20 wird eine Verklebung 21 auch oberhalb der Naht 20 zwischen dem Rand 14a und dem Schaftmaterial 12a empfohlen.

Das Schaftmaterial 12a ist beliebig und kann aus Leder bestehen oder aus Textilmaterial. Gemäß Fig. 1a ist mit dem Leder 12a ein Randstreifen 12b verbunden, welcher aus einem inneren Vlies 12b1 und Polyurethanschichten 12b2 und 12b3 besteht. Gemäß Fig.1b hängt der Randstreifen 12b integral mit dem Schaftmaterial 12a zusammen, ist aber durch eine Imprägnierung behandelt, so daß er nicht wasserdurchlässig und nicht wasserleitend ist. Die Imprägnierung wurde an dem Schaftmaterial vorgenommen, bevor dieses mit dem Futter und mit den übrigen Teilen des Schuhs vereinigt wurde.

In Fig. 1 erkennt man weiter eine Verklebungslinie 25 oberhalb der Polyurethan-Dichtmittelschicht als obere Begrenzung für die Polyurethan-Dichtmittelschicht. Diese Verklebungslinie 25 sorgt dafür, daß die Dichtmittelschicht 24 sich nicht in den Zwischenraum 27 zwischen dem Schaftmaterial 12a und dem Goretex-Futter 16 hinein ausbreiten kann. Auf diese Weise ist sichergestellt, daß das Goretex-Futter 16 im oberen Bereich des Schuhs lose an dem Schaftmaterial 12 anliegt, so daß dieser Zwischenraum 27 durch Belüftung trocken gehalten werden kann.

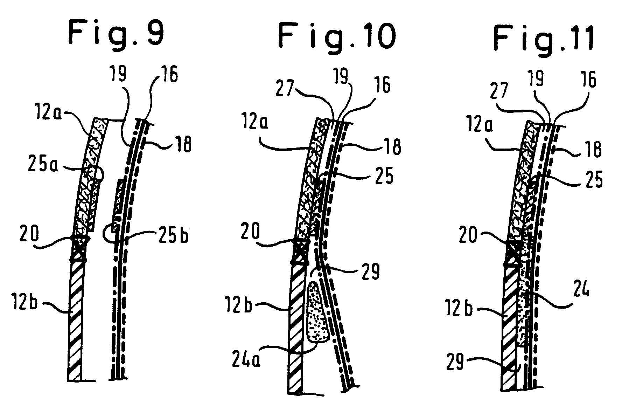

In den Fig. 9 bis 11 ist der Einbau der Dichtmittelschicht 24 gemäß Fig. 1 dargestellt. Das Schaftmaterial 12a mit dem Randstreifen 12b wird mit dem Futtermaterial 16 zusammengelegt, etwa dadurch, daß es längs des nicht dargestellten Einstiegrandes des Schuhs mit dem Futtermaterial 16 vernäht wird, nachdem vorher das Schafmaterial 12a und das Futter 16 zu einer Form verarbeitet worden sind, die das Auflegen auf einen Leisten ermöglicht. Danach werden sowohl an dem Schaftmaterial 12a als auch an dem Futter Klebelinien 25a und 25b aufgepinselt, etwa über eine Breite von 5 bis 10 mm. Diese Klebelinien 25a und 25b werden sodann gemäß Fig. 10 aneinandergedrückt unter Bildung der Klebelinie 25, etwas oberhalb der Naht 20. Dadurch entsteht ein Spalt 29. In diesen Spalt wird ein Polyurethan-Dichtmittel in dickflüssiger oder pastöser Konsistenz eingespritzt, etwa mittels einer Spritzdüse, die längs des Spalts 29 bewegt wird. Die eingespritzte Dichtmittelraupe ist mit 24a bezeichnet. Anschließend werden der Randstreifen 12b und das Futter 16 durch Einengung des Spalts 29 zusammengedrückt, so daß die Dichtmittelschicht 24 entsteht, ohne sich unkontrolliert nach oben ausbreiten zu können. Auf diese Weise ist sichergestellt, daß das Futter 16 oberhalb der Verklebungslinie 25 lose an dem Randstreifen 12b anliegt, andererseits ist sichergestellt, daß in dem verengten Spalt 29 das Dichtmittel 24a einen hinreichenden Druck erfährt, um die Textilschicht 19 durchdringen zu können, deren Fäden dicht zu umschließen und zur dichten Anlage an der Membran 16 zu kommen. Weiterhin ist sichergestellt, daß die Dichtmittelschicht 24 eine Auftragsstärke beibehält, die eine zuverlässige Wasserabdichtung gewährleistet.

Die Lage der oberen Grenze der Dichtmittelschicht 24 ist unkritisch. Sie kann unterhalb oder oberhalb der Naht 20 liegen, je nachdem, wie die Klebstoffschicht 25 gelegt wird. Die Klebestoffschicht 25 kann auch im Bereich des Randstreifens 12b liegen oder sich über die Naht 20 hinweg erstrecken. Es wird jedoch empfohlen, die Klebstoffschicht 25 möglichst tief zu legen, um bis zur Sohlenkonstruktion herab einen luftzugänglichen Zwischenraum 27 zwischen dem Schaftmaterial 12a und dem Futtermaterial 16 zu haben. Das Dichtmittel 24a, welches die Dichtmittelschicht 24 bildet, wird entweder als 2-Komponeneten-Polyurethan-Dichtmittel eingebracht oder als feuchtigkeitshärtendes Polyurethan-Dichtmittel und soll nach der Aushärtung unter Druck und Wärme dauerelastisch bleiben.

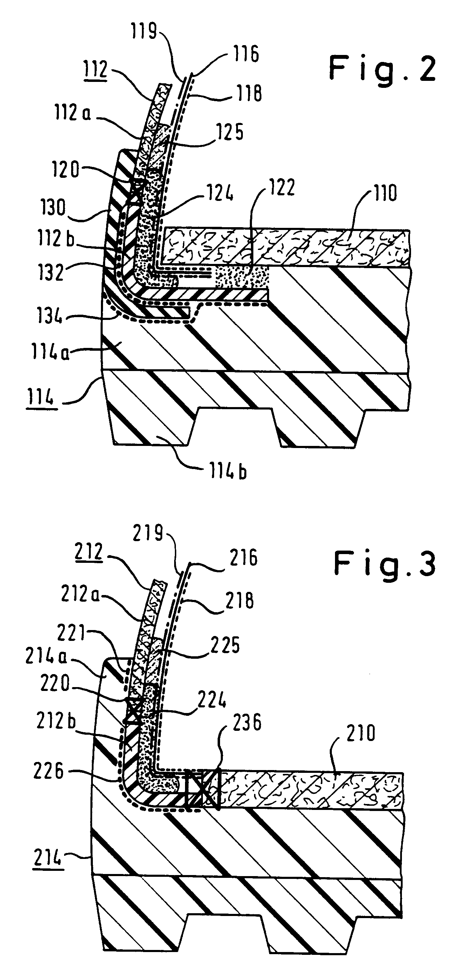

In Fig. 2 sind analoge Teile mit den gleichen Bezugszeichen versehen wie in Fig. 1, jeweils vermehr um die Zahl 100. Bei dieser Ausführungsform sind der Randstreifen 112b, die Naht 120 und der untere Randbereich des Lederschafts 112a durch einen wasserdichten Verbindungsstreifen 130 aus Gummi oder gummiähnlichem Material überdeckt und die Sohlenkonstruktion 114 schließt an den Verbindungsstreifen 130 an, indem sie diesen von unten her überdeckt. Dabei ist der Verbindungsstreifen 130 zumindest mit dem Randstreifen 112b wasserdicht durch eine Verklebung 132 verklebt möglicherweise auch mit dem unteren Randbereich des Lederschafts 112a. Die Sohlenkonstruktion 114 besteht hier aus einer Zwischensohle 114a und einer Laufsohle 114b. Die Zwischensohle 114a ist wasserdicht und ist mit dem Verbindungsstreifen 130 durch eine Klebung 134 wasserdicht verklebt. Diese Verklebung 134 kann sich auch noch in den Bereich des Randstreifens 112b erstrecken.

Die Dichtmittelschicht 124 muß mit dem Randstreifen 112b und dem Futter 116 verklebt sein. Eine weitere Verklebung der Dichtmittelschicht 124 mit dem Lederschaft 112a ist vorteilhaft, aber nicht notwendig.

Bei der Ausführungsform nach Fig. 3 sind analoge Teile mit gleichen Bezugszeichen versehen wie in der Ausführungsform der Fig. 1, jeweils vermehrt um die Zahl 200. Bei dieser Ausführungsform ist der Randstreifen 212b gemeinsam mit dem Futter 216

durch eine Strobelnaht 236 an die Brandsohle 210 angenäht. Die Strobelnaht 236 wird in der Weise hergestellt, daß der Randstreifen 212b auf der Brandsohle 210 flach aufliegend mit dieser randvernäht wird und daß der Randstreifen 212b sodann in die in Fig. 3 dargestellte Stellung um ca. 180° geklappt wird. Im übrigen entspricht das Dichtungssystem in Fig. 3 demjenigen in Fig. 1.

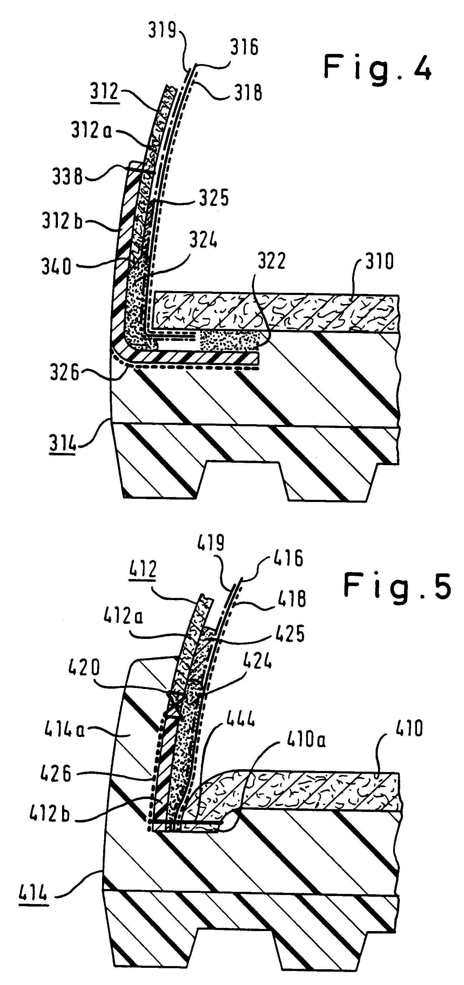

In Fig. 4 sind analoge Teile mit gleichen Bezugszeichen versehen wie in Fig. 1, weils erhöht um die Zahl 300. Bei dieser Ausführungsform nach Fig. 4 ist der Randstreifen 312b mit dem Schaftteil 312a durch eine Steppstichnaht 338 vernäht. Der Schaftteil 312a ist bei 340 abgeschrägt. Im übrigen entspricht das Dichtungssystem der Ausführungsform nach Fig. 1.

In Fig. 5 sind analoge Teile mit gleichen Bezugszeichen versehen wie in Fig. 1, jeweils vermehrt um 400. Bei dieser Ausführungsform ist der Randstreifen 412b mit einem nach unten abgewinkelten Teil 410a der Brandsohle 410 durch eine Steppstichnaht 444 verbunden, die sich auch durch das wasserdichte Futter 416 und durch die Dichtmittelschicht 424 hindurch erstreckt. Im übrigen entspricht das Abdichtungssystem demjenigen nach Fig. 1.

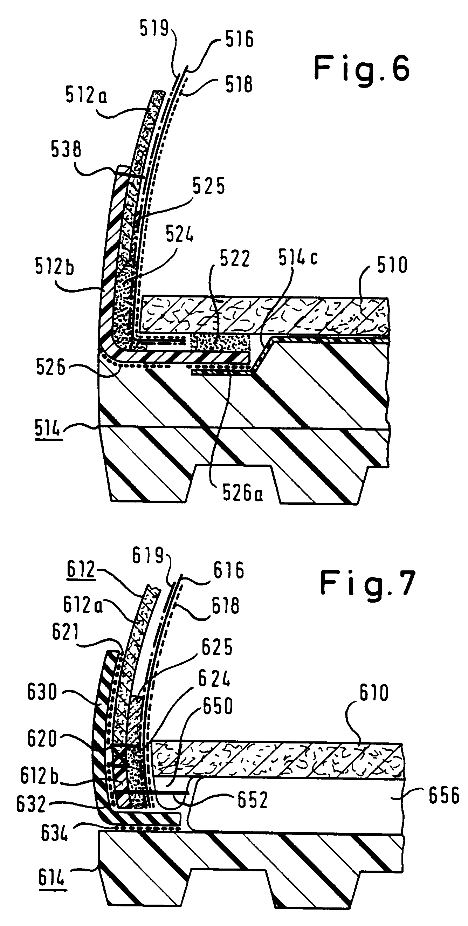

In der Ausführungsform nach Fig. 6 sind analoge Teile mit gleichen Bezugszeichen versehen wie in Fig. 4, jeweils vermehrt um die Zahl 200. Bei dieser Ausführungsform ist als dichtende Schicht im Rahmen der Sohlenkonstruktion eine Folie 514c vorgesehen, die mit dem Randstreifen 512b durch die Klebeschicht 526a dicht verbunden ist. Im übrigen entspricht das Abdichtungssystem demjenigen nach Fig. 4. Bei dieser Ausführungsform könnte die Sohlenkonstruktion unterhalb der Folie 514c auch aus wasserführendem Material, insbesondere Leder, bestehen.

In Fig. 7 sind analoge Teile mit gleichen Bezugszeichen versehen wie in Fig. 1, jeweils vermehrt um die Zahl 600. Die Brandsohle 610 ist hier mit einer Einstechlippe 650 versehen, die aufgeklebt oder angespritzt sein kann. Eine Einstechnaht 652 durchsetzt den Randstreifen 612b und die Einstechlippe 650, wobei - wie gezeigt - die Naht 652 auch durch die Dichtmasse 624 und das Futter 616 hindurchgehen kann. Die Sohle 614 ist durch eine Verklebung 634 an dem Verbindungsstreifen 630 dicht befestigt. Der Zutritt von Feuchtigkeit zur Unterseite der Brandsohle 610 ist ausgeschlossen, zum einen durch die dichte Anlage der Sohle 614 an den Verbindungsstreifen 630, zum zweiten durch die dichte Anlage des Verbindungsstreifens 630 an den Randstreifen 612b, zumindest im Bereich zwischen der Zickzacknaht 620 und der Einstechnaht 652 und zum dritten durch die Dichtmasse 624 in dichtender Anlage an den Randstreifen 612b und das Futter 616. Der durch die Einstechlippe 650 gebildete Hohlraum ist durch ein Kunststoffteil oder Ausball 656 gefüllt.

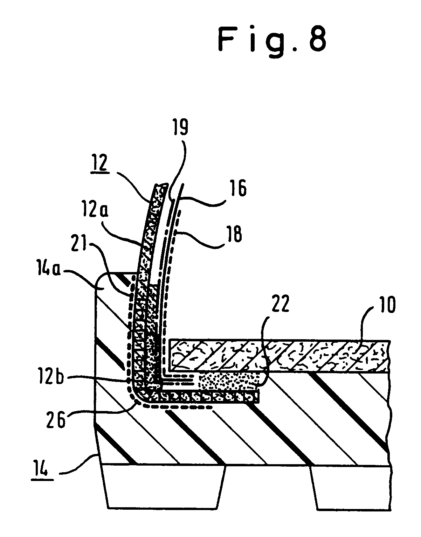

In Fig. 8 ist eine Abwandlung zur Fig. 1 dargestellt, bei welcher das Schaftmaterial 12a integral mit dem Randstreifen 12b zusammenhängt und durch Imprägnierung behandelt worden ist, wie im Zusammenhang mit Fig. 1 gezeichnet und beschrieben.

Es sei nochmal darauf hingewiesen, daß die Sohle 14 auch angespritzt werden kann, nachdem der Randstreifen 12b an der Brandsohle 10 befestigt worden ist. Aber auch in diesem Fall wird vorher die Dichtmittelschicht 24 zwischen den Randstreifen 12b und das Futter 16 eingebracht, so wie in Zusammenhang mit den Fig. 9 bis 11 beschrieben wurde. Dies ist auch notwendig, weil beim Anspritzen einer Sohle 14 die Spritzmasse nicht durch den Randstreifen 12b hindurchdringen kann.

**Patentansprüche**

1. Schuh mit einem Schaft (12), einer mit dem Schaft (12) verbundenen Brandsohle (10), einer mit dem Schaft (12) verbundenen Sohlenkonstruktion (14) und einem im wesentlichen wasserdichten Futter (16),
   wobei der aus einem Material höherer Wasserleitfähigkeit bestehende Schaft (12a) einen mit ihm zusammenhängenden Randstreifen (12b) aus einem Material geringerer oder fehlender Wasserleitfähigkeit besitzt, der mit der Brandsohle (10) verbunden ist und unter Vermittlung einer dichtenden Masse (24) an dem wasserdichten Futter wasserdicht anliegt,
   wobei die Sohlenkonstruktion (14) mindestens eine wasserdichte Schicht aufweist, die mit der Aussenseite des Randstreifens (12b) wasserdicht verbunden ist,
   wobei,
   der Randstreifen (12b) aus einem material besteht, welches bereits vor der Verbindung mit der Sohlenkonstruktion (14) eine geringere oder fehlende Wasserleitfähigkeit besitzt und wobei zwischen dem Randstreifen (12b) und dem Futter (16) eine von der Anbringung der Sohlenkonstruktion (14) unabhängige Dichtmittelschicht (24) eingebracht ist.

2. Schuh nach Anspruch 1,
   **dadurch gekennzeichnet,**
   daß der Randstreifen (12b) aus einem Kunststoffmaterial besteht.

3. Schuh nach Anspruch 2,
   **dadurch gekennzeichnet,**
   daß der Randstreifen (12b) aus einem Kunststoffmaterial besteht, welches eine Gewebeschicht (12b1) und auf beiden Seiten der Gewebeschicht (12b1) eine Kunststoffschicht (12b2, 12b3) aufweist.

4. Schuh nach Anspruch 3,

**dadurch gekennzeichnet,**
daß die Gewebeschicht (12b1) aus monofilen Fäden besteht.

5. Schuh nach Anspruch 3 oder 4,
   **dadurch gekennzeichnet,**
   daß die Kunststoffschichten (12b2, 12b3) auf beiden Seiten der Gewebeschicht (12b1) Polyurethan-Schichten sind.

6. Schuh nach Anspruch 1,
   **dadurch gekennzeichnet,**
   daß der Randstreifen (12b) von einem Faservlies gebildet ist, welches vor der Verbindung mit der Sohlenkonstruktion (14) mit einem die Wasserleitfähigkeit unterdrückenden Imprägniermittel imprägniert wurde.

7. Schuh nach Anspruch 1,
   **dadurch gekennzeichnet,**
   daß der Randstreifen (12b) von einem Lederstreifen gebildet ist, welcher zur Unterdrückung der Wasserleitfähigkeit mit einem Imprägniermittel imprägniert worden ist.

8. Schuh nach einem der Ansprüche 1 bis 7,
   **dadurch gekennzeichnet,**
   daß der Randstreifen (12b) unabhängig von dem Schaftmaterial (12a) hergestellt und nachträglich mit dem Schaftmaterial (12a) verbunden worden ist.

9. Schuh nach Anspruch 8,
   **dadurch gekennzeichnet,**
   daß der Randstreifen (12b) mit dem Schaftmaterial (12a) vernäht ist.

10. Schuh nach einem der Ansprüche 8 oder 9,
    **dadurch gekennzeichnet,**
    daß der Randstreifen (12b) mit dem Schaftmaterial (12a) stumpf zusammenstößt.

11. Schuh nach Anspruch 8 oder 9,
    **dadurch gekennzeichnet,**
    daß der Randstreifen (312b) an der Verbindungsstelle mit dem Schaftmaterial (312a) das Schaftmaterial (312a) überlappt.

12. Schuh nach Anspruch 11,
    **dadurch gekennzeichnet,**
    daß der Randstreifen (312b) das Schaftmaterial (312a) auf dessen Aussenseite überlappt.

13. Schuh nach einem der Ansprüche 1 bis 7,
    **dadurch gekennzeichnet,**
    daß der Randstreifen (12b) integral mit dem Schaftmaterial (12a) zusammenhängt und vor der Verbindung mit der Sohlenkonstruktion (14) mit einem die Wasserleitfähigkeit unterdrückenden Imprägniermittel imprägniert worden ist.

14. Schuh nach einem der Ansprüche 1 bis 13,
**dadurch gekennzeichnet,**
daß das Dichtmittel (24) zwischen dem Randstreifen (12b) und dem im wesentlichen wasserdichten Futter (16) auf den Bereich des Randstreifens (12b) und ggf. einen schmalen Randbereich des Schaftmaterials (212a) längs der Verbindungslinie (220) zwischen dem Schaftmaterial (212a) und dem Randstreifen (212b) beschränkt ist.

15. Schuh nach einem der Ansprüche 1 bis 14,
**dadurch gekennzeichnet,**
daß das Dichtmittel (24) durch eine Verklebungslinie (25) zwischen dem wasserdichten Futter (16) einerseits und dem Randstreifen (12b) und/oder dem Schaftmaterial (12a) andererseits innerhalb des Zwischenraums (27) zwischen dem wasserdichten Futter (16) einerseits und dem Schaftmaterial (12a) und/oder dem Randstreifen (12b) andererseits nach oben begrenzt ist.

16. Schuh nach einem der Ansprüche 1 bis 15,
**dadurch gekennzeichnet,**
daß das Dichtmittel (24) ein Dichtmittel auf der Basis von Polyurethan, Polyvinylchlorid, Naturkautschuk oder Synthesekautschuk ist.

17. Schuh nach einem der Ansprüche 1 bis 16,
**dadurch gekennzeichnet,**
daß das Dichtmittel (24) ein 2-Komponenten-Polyurethan-Dichtmittel ist.

18. Schuh nach Anspruch 16,
**dadurch gekennzeichnet,**
daß das Dichtmittel (24) ein feuchtigkeitshärtendes Polyurethan-Dichtmittel ist.

19. Schuh nach einem der Ansprüche 1 bis 18,
**dadurch gekennzeichnet,**
daß das Dichtmittel (24) im ausgehärteten Zustand dauerelastisch ist.

20. Schuh nach einem der Ansprüche 1 bis 19,
**dadurch gekennzeichnet,**
daß bei Beschichtung des wasserdichten Futters (16) mit einer Textilschicht (19) auf seiner Aussenseite die Textilschicht (19) von dem Dichtmittel (24) durchdrungen ist derart, daß das Dichtmittel (24) wasserdicht an dem wasserdichten Futter (16) anliegt.

21. Schuh nach Anspruch 20,
**dadurch gekennzeichnet,**
daß die Textilbeschichtung (19) auf der Aussenseite des wasserdichten Futters (26) von monofilen Fäden gebildet ist.

22. Schuh nach einem der Ansprüche 1 bis 21,
**dadurch gekennzeichnet,**
daß das wasserdichte Futter (16) oberhalb des Dichtmittel (24) lose an dem Schaftmaterial (12a) anliegt.

23. Schuh nach einem der Ansprüche 15 bis 22,
**dadurch gekennzeichnet,**
daß das wasserdichte Futter (16) oberhalb der Verklebungslinie (25) lose an dem Schaftmaterial (12a) anliegt.

24. Schuh nach einem der Ansprüche 1 bis 23,
**dadurch gekennzeichnet,**
daß der Randstreifen (12b) an der Unterseite der Brandsohle (10) überlappend anliegt und im Überlappungsbereich mit der Brandsohle (10) verbunden ist.

25. Schuh nach Anspruch 24,
**dadurch gekennzeichnet,**
daß das wasserdichte Futter (16) im Überlappungsbereich mit der Brandsohle (10) vor dem Randstreifen (12b) endet und daß der Randstreifen (12b) im Überlappungsbereich mit der Brandsohle (10) ausserhalb des Futterrands mit der Brandsohle (10) verbunden ist (bei 22).

26. Schuh nach Anspruch 25,
**dadurch gekennzeichnet,**
daß der Randstreifen (12b) mit der Brandsohle (10) durch einen Schmelzkleber (22) verbunden ist.

27. Schuh nach einem der Ansprüche 1 bis 23,
**dadurch gekennzeichnet,**
daß der Randstreifen (212b) ggf. gemeinsam mit dem Futter (216) durch eine Strobelnaht (236) mit der Brandsohle (210) verbunden ist.

28. Schuh nach einem der Ansprüche 1 bis 23,
**dadurch gekennzeichnet,**
daß der Randstreifen (412b) ggf. zusammen mit dem wasserdichten Futter (416) an einer abwärts gebogenen Randzone (410a) der Brandsohle (410) durch eine Steppstichnaht (444) befestigt ist.

29. Schuh nach einem der Ansprüche 1 bis 23,
**dadurch gekennzeichnet,**
daß der Randstreifen (612b) ggf. zusammen mit dem Dichtmittel (624) und/order dem wasserdichten Futter (616) mit einer abwärts gerichteten Einstechlippe (650) der Brandsohle (610) vernäht ist.

30. Schuh nach einem der Ansprüche 1 bis 29, **dadurch gekennzeichnet,** daß die wasserdichte Schicht der Sohlenkonstruktion (14) von einer ggf. als Schalensohle (114a) ausgebildeten Zwischensohle (114a) gebildet ist.

31. Schuh nach einem der Ansprüche 1 bis 29, **dadurch gekennzeichnet,** daß die wasserdichte Schicht der Sohlenkonstruktion (514) von einer wasserdichten, ggf. dampfdurchlässigen Folie (514c) gebildet ist.

32. Schuh nach Anspruch 30 oder 31, **dadurch gekennzeichnet,** daß bei Überlappung des Randstreifens (512b) mit der Unterseite der Brandsohle (510) ein der Sohlenmitte naher Bereich des Randstreifens (512b) mit der wasserdichten Folie (514c) dicht verklebt ist, während ein der Sohlenmitte fernerer Bereich des Randstreifens (512b) mit einer Zwischensohle verklebt ist.

33. Schuh nach einem der Ansprüche 1 bis 32, **dadurch gekennzeichnet,** daß das wasserdichte Futter (16) mit einer inneren textilartigen Beschichtung (18) versehen ist.

34. Schuh nach einem der Ansprüche 1 bis 33, **dadurch gekennzeichnet,** daß das wasserdichte Futter (16) mit einer äußeren Schutzbeschichtung (19) aus Gewebe, z.B. aus einem Polyamidfadengewebe oder einem Polyesterfadengewebe beschichtet ist, wobei das Dichtmittel (24) die Schutzbeschichtung (19) aus Gewebe unter dichter Anlage an dem wasserdichten Futter (16) durchdringt und die vorzugsweise monofilen Fäden des Gewebes (19) wasserdicht umschließt und wobei ferner die Fäden des Gewebes (19) nicht wasserführend sind.

35. Schuh nach einem der Ansprüche 1 bis 34, **dadurch gekennzeichnet,** daß das im wesentlichen wasserdichte Futter (16) dampfdurchlässig ist.

36. Schuh nach Anspruch 35, **dadurch gekennzeichnet,** daß das im wesentlichen wasserdichte Futter (16) eine Folie aus gerecktem Polytetraflouräthylen, eine Polyestermembran oder eine mikroporöse Polyurethanschicht umfaßt.

37. Schuh nach einem der Ansprüche 1 bis 36, **dadurch gekennzeichnet,** daß das wasserdichte Futter (16) bis in den Bereich des Einstiegrandes des Schuhs reicht.

38. Schuh nach einem der Ansprüche 1 bis 37, **dadurch gekennzeichnet,** daß er als hochschäftiger Schuh, insbesondere Sport- oder Wanderstiefel, ausgebildet ist.

39. Schuh nach einem der Ansprüche 1 bis 37, **dadurch gekennzeichnet,** daß er als Halbschuh ausgebildet ist.

40. Verfahren zur Herstellung eines Schuhs, dieser Schuh umfassend einen mit der Brandsohle (10) verbundenen Schaft (12), eine mit dem Schaft (12) verbundene Sohlenkonstruktion (14) und ein im wesentlichen wasserdichtes Futter (16), wobei der Schaft (12) aus einem Material (12a) höherer Wasserleitfähigkeit besteht und mit einem Randstreifen (12b) aus einem Material geringerer oder fehlender Wasserleitfähigkeit zusammenhängt, wobei weiter der Randstreifen (12b) mit der Brandsohle (10) verbunden ist, wobei weiter der Randstreifen (12b) unter Vermittlung einer dichtenden Masse (24) an dem Futter (16) wasserdicht anliegt und wobei die Sohlenkonstruktion (14) mindestens eine an sich wasserdichte Schicht aufweist, die mit dem Randstreifen (12b) wasserdicht verbunden ist, **dadurch gekennzeichnet,** daß man den Randstreifen (12b) aus nicht wasserleitfähigem Material an dem Schaftmaterial (12a) vorsieht, daß man zwischen dem Randstreifen (12b) und dem wasserdichten Futter (16) die Dichtmasse (24) in pastöser oder flüssiger Form einbringt, daß man den Randstreifen (12b) hierauf an der Brandsohle (10) befestigt und daß man schließlich die wasserdichte Sohlenkonstruktion (14) anbringt.

41. Verfahren nach Anspruch 40, **dadurch gekennzeichnet,** daß man vor dem Einbringen des Dichtmittels (24) zwischen dem wasserdichten Futter (16) einerseits und dem Randstreifen (12b) und ggf. dem Schaftmaterial (12a) andererseits eine Klebelinie (25) vorsieht und in den durch diese Klebelinie (25) begrenzten Spalt (29) das Dichtmittel (24a) einbringt.

42. Verfahren nach einem der Ansprüche 40 oder 41, **dadurch gekennzeichnet,** daß man den Randstreifen (12b) mit dem Schaftmaterial (12a) verbindet.

43. Verfahren nach einem der Ansprüche 40 oder 41, **dadurch gekennzeichnet,** daß man den Randstreifen (12b) aus einem integralen Teil des Schaftmaterials (12a) durch Imprägnierung bildet.

## Claims

1. A shoe with an upper (12), an insole (10) connected to the upper (12), a sole construction (14) connected to the upper (12) and a substantially waterproof lining (16), the upper (12a) which consists of a material of relatively high water-conductivity having connected to it a marginal strip (12b) of a material of lesser or no water-conductivity which is connected to the insole (10) and which through the interposition of a sealing-tight compound (24) bears on the waterproof lining in a waterproof fashion, the sole structure (14) having at least one per se watertight layer which is connected in watertight manner to the outside of the marginal strip (12b), the marginal strip (12b) consisting of a material which even prior to connection to the sole structure (14) has less or no water-conductivity, and there being incorporated between the marginal strip (12b) and the lining (16) a layer (24) of sealing means independent of the providing of the sole structure (14).

2. A shoe according to Claim 1, characterised in that the marginal strip (12b) consists of a synthetic plastics material.

3. A shoe according to Claim 2, characterised in that the marginal strip (12b) consists of a synthetic plastics material having a fabric layer (12b1) and on both sides of the fabric layer (12b1) a synthetic plastics layer (12b2, 12b3).

4. A shoe according to Claim 3 characterised in that the fabric layer (12b1) consists of monofilament threads.

5. A shoe according to Claim 3 or 4, characterised in that the synthetic plastics layers (12b2, 12b3) on both sides of the fabric layer (12b1) are layers of polyurethane.

6. A shoe according to Claim 1, characterised in that the marginal strip (12b) consists of a fibre fleece which, prior to being connected to the sole structure (14), was impregnated with an impregnating agent to suppress water-conductivity.

7. A shoe according to Claim 1, characterised in that the marginal strip (12b) is formed by a leather strip which has been impregnated with an impregnating agent for the suppression of water-conductivity.

8. A shoe according to one of Claims 1 to 7, characterised in that the marginal strip (12b) is produced independently of the upper material (12a) and is subsequently connected to the upper material (12a).

9. A shoe according to Claim 8, characterised in that the marginal strip (12b) is sewn onto the upper material (12a).

10. A shoe according to one of Claims 8 or 9, characterised in that the marginal strip (12b) abuts the upper material (12a).

11. A shoe according to Claim 8 or 9, characterised in that the marginal strip (312b) overlaps the upper material (312a) at the junction with the upper material (312a).

12. A shoe according to Claim 11, characterised in that the marginal strip (312b) overlaps the outside of the upper material (312a).

13. A shoe according to one of Claims 1 to 7, characterised in that the marginal strip (12b) is connected and is integral with the upper material (12a) and, prior to being joined to the sole structure (14), has been impregnated with an impregnating agent which suppresses water-conductivity.

14. A shoe according to one of Claims 1 to 13, characterised in that the sealing means (24) between the marginal strip (12b) and the substantially waterproof lining (16) is confined to the area of the marginal strip (12b) and possibly a narrow marginal area of the upper material (212a) along the line of connection (220) between the upper material (212a) and the marginal strip (212b).

15. A shoe according to one of Claims 1 to 14, characterised in that the sealing agent (24) is bounded upwardly by a line of adhesion (25) between the waterproof lining (16) on the one hand and the marginal strip (12b) and/or the upper material (12a) on the other within the intermediate space (27) between the waterproof lining (16) on the one hand and the upper material (12a) and/or the marginal strip (12b) on the other.

16. A shoe according to one of Claims 1 to 15, characterised in that the sealing agent (24) is a polyurethane polyvinyl chloride, natural rubber or synthetic rubber based sealing agent.

17. A shoe according to one of Claims 1 to 16, characterised in that the sealing agent (24) is a bi-component polyurethane sealing agent.

**18.** A shoe according to Claim 16, characterised in that the sealing agent (24) is a moisture-hardening polyurethane sealing agent.

**19.** A shoe according to one of Claims 1 to 18, characterised in that once it has set the sealing agent (24) is continuously flexible.

**20.** A shoe according to one of Claims 1 to 19, characterised in that if the waterproof lining (16) is coated with a textile layer (19) on its outside the textile layer (19) is penetrated by the sealing agent (24) so that the sealing agent (24) bears against the waterproof lining (16) in watertight manner.

**21.** A shoe according to Claim 20, characterised in that the textile coating (19) on the outside of the waterproof lining (26) consists of monofilament threads.

**22.** A shoe according to one of Claims 1 to 21, characterised in that the waterproof lining (16) over the sealing agent (24) rests loosely against the upper material (12a).

**23.** A shoe according to one of Claims 15 to 22, characterised in that the waterproof lining (16) above the adhesion line (25) rests loosely against the upper material (12a).

**24.** A shoe according to one of Claims 1 to 23, characterised in that the marginal strip (12b) bears against and overlaps the underside of the insole (10) and is connected to the insole (10) in the overlapping zone.

**25.** A shoe according to Claim 24, characterised in that in the area of overlap with the insole (10), the waterproof lining (16) ends before the marginal strip (12b) and in that in the area of overlap with the insole (10) and outside the edge of the lining, the marginal strip (12b) is connected to the insole (10) (at 22).

**26.** A shoe according to Claim 25, characterised in that the marginal strip (12b) is connected to the insole (10) by a hot-melt glue (22).

**27.** A shoe according to one of Claims 1 to 23, characterised in that the marginal strip (212b), possibly together with the lining (216), is connected to the insole (210) by a cross-sewn seam (236).

**28.** A shoe according to one of Claims 1 to 23, characterised in that the marginal strip (412b), possibly together with the waterproof lining (416), is fixed to a downwardly bent-over marginal zone (410a) of the insole (410) by a lock-stitch seam (444).

**29.** A shoe according to one of Claims 1 to 23, characterised in that the marginal strip (612b), possibly together with the sealing agent (624) and/or the waterproof lining (616), is sewn to a downwardly directed engaging lip (650) of the insole (610).

**30.** A shoe according to one of Claims 1 to 29, characterised in that :he waterproof layer in the sole structure (14) is formed by an intermediate sole (114a) which is constructed possibly as a shell sole (114a).

**31.** A shoe according to one of Claims 1 to 29, characterised in that the waterproof layer of the sole structure (514) is formed by a waterproof and possibly vapour-permeable film (514c).

**32.** A shoe according to Claim 30 or 31, characterised in that when the marginal strip (512b) overlaps the underside of the insole (510), an area of the marginal strip (512b) which is close to the middle of the sole is glued in sealing fashion to the waterproof film (514c) while an area of the marginal strip (512b) which is more remote from the centre of the sole is glued to an intermediate sole.

**33.** A shoe according to one of Claims 1 to 32, characterised in that the waterproof lining (16) is provided with an inner coating (18) of textile-like material.

**34.** A shoe according to one of Claims 1 to 33, characterised in that the waterproof lining (16) is coated with an outer protective coating (19) of fabric, e.g. a polyamide thread fabric or a polyester thread fabric, the sealing agent (24) penetrating the fabric protective coating (19) so that it bears closely against the waterproof lining (16), enclosing the preferably monofilament threads of the fabric (19) in waterproof fashion, the threads of the fabric (19) not being water-conductive.

**35.** A shoe according to one of Claims 1 to 34, characterised in that the substantially waterproof lining (16) is permeable to vapour.

**36.** A shoe according to Claim 35, characterised in that the substantially waterproof lining (16) comprises a film of stretched polytetrafluoroethylene, a polyester membrane or a microporous layer of polyurethane.

**37.** A shoe according to one of Claims 1 to 36, characterised in that the waterproof lining (16) extends into the region of the access rim of the shoe.

38. A shoe according to one of Claims 1 to 37, characterised in that it is constructed as a high-upper shoe, particularly a sports or hiking boot.

39. A shoe according to one of Claims 1 to 37, characterised in that it is constructed as a half-shoe.

40. A method of producing a shoe, the shoe comprising an upper (12) connected to the insole (10), a sole structure (14) connected to the upper (12) and a substantially waterproof lining (16), the upper (12) consisting of a material (12a) of relatively high water-conductivity and is connected to a marginal strip (12b) of a material of less or no water-conductivity, the marginal strip (12b) being furthermore connected to the insole (10), the marginal strip (12b) furthermore bearing in waterproof manner against the lining (16) through an interposed sealing composition (24), the sole structure (14) having at least one layer which is waterproof in itself and which is connected in waterproof fashion to the marginal strip (12b), characterised in that the marginal strip (12b) is of a non-water-conductive material and is provided on the upper material (12a) and in that between the marginal strip (12b) and the waterproof lining (16) the sealing composition (24) is incorporated in a pasty or liquid form and in that the marginal strip (12b) is then attached to the insole (10) and in that the waterproof sole structure (14) is finally fitted.

41. A method according to Claim 40, characterised in that prior to incorporating the sealing agent (24) between the waterproof lining (16) on the one hand and the marginal strip (12b) and possibly the upper material (12a) on the other an adhesive line (25) is provided, the sealing agent (24a) being incorporated into the gap (29) defined by this adhesive line (25).

42. A method according to one of Claims 40 or 41, characterised in that the marginal strip (12b) is connected to the upper material (12a).

43. A method according to one of Claims 40 or 41, characterised in that the marginal strip (12b) is formed from an integral part of the upper material (12a) by impregnation.

## Revendications

1. Chaussure comportant une tige (12), une première semelle (10) assemblée à la tige (12), une construction de semelle (14) assemblée à la tige (12) et une doublure (16) à peu près étanche à l'eau,

dans laquelle la tige (12a), réalisée dans une matière de plus grande perméabilité à l'eau, possède une bande de bordure (12b), attenante à celle-ci, réalisée dans une matière moins ou pas perméable à l'eau, qui est assemblée à la première (10) et qui s'applique, de manière étanche à l'eau, contre la doublure étanche à l'eau, avec interposition d'un produit d'étanchéité (24),

dans laquelle la construction de semelle (14) présente au moins une couche étanche à l'eau qui est assemblée, de manière étanche à l'eau, avec la face extérieure de la bande de bordure (12b),

dans laquelle la bande de bordure (12b) est réalisée dans une matière qui, avant même son assemblage avec la construction de semelle (14), présente une perméabilité à l'eau plus faible ou nulle et dans laquelle une couche d'un produit d'étanchéité (24), indépendante de la mise en place de la construction de semelle (14), est placée entre la bande de bordure (12b) et la doublure (16).

2. Chaussure selon la revendication 1, caractérisée en ce que la bande de bordure (12b) est réalisée dans une matière synthétique.

3. Chaussure selon la revendication 2, caractérisée en ce que la bande de bordure (12b) est réalisée dans une matière synthétique qui comporte une couche de tissu (12b1) et, sur les deux côtés de la couche de tissu (12b1), une couche de matière synthétique (12b2, 12b3).

4. Chaussure selon la revendication 3, caractérisée en ce que la couche de tissu (12b1) est constituée de monofilaments.

5. Chaussure selon la revendication 3 ou 4, caractérisée en ce que les couches de matière synthétique (12b2, 12b3), situées des deux côtés de la couche de tissu (12b1), sont des couches de polyuréthanne.

6. Chaussure selon la revendication 1, caractérisée en ce que la bande de bordure (12b) est formée par un non-tissé qui, avant son assemblage avec la construction de semelle (14), a été imprégné avec un produit d'imprégnation réduisant la perméabilité à l'eau.

7. Chaussure selon la revendication 1, caractérisée en ce que la bande de bordure (12b) est formée par une bande de cuir qui a été imprégnée d'un produit d'imprégnation pour réduire la perméabilité à l'eau.

8. Chaussure selon l'une des revendications 1 à 7, caractérisée en ce que la bande de bordure (12b) a été réalisée indépendamment de la matière de la tige (12a) et assemblée ensuite avec celle-ci.

9. Chaussure selon la revendication 8, caractérisée en ce que la bande de bordure (12b) est cousue avec la matière de la tige (12a).

10. Chaussure selon l'une des revendications 8 ou 9, caractérisée en ce que la bande de bordure (12b) est assemblée bout à bout avec la matière de la tige (12a).

11. Chaussure selon la revendication 8 ou 9, caractérisée en ce que la bande de bordure (312b) recouvre la matière de la tige (312a), en leur zone d'assemblage.

12. Chaussure selon la'revendication 11, caractérisée en ce que la bande de bordure (312b) recouvre la matière de la tige (312a) sur son côté extérieur.

13. Chaussure selon l'une des revendications 1 à 7, caractérisée en ce que la bande de bordure (12b) fait partie intégrante de la matière de la tige (12a) et a été imprégnée d'un produit d'imprégnation, réduisant la perméabilité à l'eau, avant son assemblage avec la construction de semelle (14).

14. Chaussure selon l'une des revendications 1 à 13, caractérisée en ce que le produit d'étanchéité (24), entre la bande de bordure (12b) et la doublure (16) pratiquement étanche à l'eau, est limité à la zone de la bande de bordure (12b) et éventuellement à une étroite zone de bordure de la matière de la tige (212a), le long de la ligne d'assemblage (220) entre la matière de la tige (212a) et la bande de bordure (212b).

15. Chaussure selon l'une des revendications 1 à 14, caractérisée en ce que le produit d'étanchéité (24) est limité vers le haut par une ligne de collage (25) entre la doublure (16) étanche à l'eau d'une part et la bande de bordure (12b) et/ou la matière de la tige (12a) d'autre part, à l'intérieur de l'espace intermédiaire (27) séparant la doublure (16) étanche à l'eau d'une part de la matière de la tige (12a) et/ou de la bande de bordure (12b) d'autre part.

16. Chaussure selon l'une des revendications 1 à 15, caractérisée en ce que le produit d'étanchéité (24) est un produit à base de polyuréthanne, de chlorure de polyvinyle, de caoutchouc naturel ou de caoutchouc de synthèse.

17. Chaussure selon l'une des revendications 1 à 16, caractérisée en ce que le produit d'étanchéité (24) est un produit à base de polyuréthanne à deux composants.

18. Chaussure selon la revendication 16, caractérisée en ce que le produit d'étanchéité (24) est un produit à base de polyuréthanne durcissant à l'humidité.

19. Chaussure selon l'une des revendications 1 à 18, caractérisée en ce que le produit d'étanchéité (24) est durablement élastique à l'état durci.

20. Chaussure selon l'une des revendications 1 à 19, caractérisée en ce que dans le cas où la doublure (16) étanche à l'eau est recouverte d'une couche textile (19) sur son côté extérieur, la couche textile (19) est traversée par le produit d'étanchéité (24) de manière que le produit d'étanchéité (24) s'applique, de façon étanche à l'eau, contre la doublure (16) étanche à l'eau.

21. Chaussure selon la revendication 20, caractérisée en ce que le revêtement textile (19) sur le côté extérieur de la doublure (26) étanche à l'eau, est formé de monofilaments.

22. Chaussure selon l'une des revendications 1 à 21, caractérisée en ce que la doublure (16) étanche à l'eau, au-dessus du produit d'étanchéité (24), s'applique librement contre la matière de la tige (12a).

23. Chaussure selon l'une des revendications 15 à 22, caractérisée en ce que la doublure (16) étanche à l'eau, au-dessus de la ligne de collage (25), s'applique librement contre la matière de la tige (12a).

24. Chaussure selon l'une des revendications 1 à 23, caractérisée en ce que la bande de bordure (12b) s'applique par recouvrement contre la face inférieure de la première (10) et est assemblée à la première (10), dans la zone de recouvrement.

25. Chaussure selon la revendication 24, caractérisée en ce que la doublure (16) étanche à l'eau se termine, dans la zone de recouvrement avec la première (10), avant la bande de bordure (12b) et en ce que la bande de bordure (12b), dans la zone de recouvrement avec la première (10), est assemblée avec la première (10), à l'extérieur du bord de la doublure.

26. Chaussure selon la revendication 25, caractérisée en ce que la bande de bordure (12b) est assemblée à la première (10), par une colle fusible.

27. Chaussure selon l'une des revendications 1 à 23, caractérisée en ce que la bande de bordure (212b), le cas échéant avec la doublure (216), est assemblée à la première (210), par une couture surpiquée (236).

28. Chaussure selon l'une des revendications 1 à 23, caractérisée en ce que la bande de bordure (412b), le cas échéant avec la doublure (416) étanche à l'eau, est fixée sur une zone de bordure (410a), recourbée vers le bas, de la première (410), par une piqûre sellier (444).

29. Chaussure selon l'une des revendications 1 à 23, caractérisée en ce que la bande de bordure (612b), le cas échéant avec le produit d'étanchéité (624) et/ou la doublure (616) étanche à l'eau, est cousue avec une lèvre plongeante (650), dirigée vers le bas, de la première (610).

30. Chaussure selon l'une des revendications 1 à 29, caractérisée en ce que la couche étanche à l'eau de la construction de semelle (14) est formée par une semelle intermédiaire (114b), éventuellement conçue sous la forme d'une semelle en coque (114a).

31. Chaussure selon l'une des revendications 1 à 29, caractérisée en ce que la couche étanche à l'eau de la construction de semelle (514) est formée par une feuille (514c) étanche à l'eau, éventuellement perméable à la vapeur.

32. Chaussure selon la revendication 30 ou 31, caractérisée en ce que dans le cas où la bande de bordure (512b) est recouverte par la face inférieure de la première (510), une zone, proche du milieu de la semelle, de la bande de bordure (512b), est collée de façon étanche avec la feuille (514c) étanche à l'eau, tandis qu'une zone, plus éloignée du milieu de la semelle, de la bande de bordure (512b), est collée avec une semelle intermédiaire.

33. Chaussure selon l'une des revendications 1 à 32, caractérisée en ce que la doublure (16) étanche à l'eau est recouverte d'une couche (18) intérieure, de type textile.

34. Chaussure selon l'une des revendications 1 à 33, caractérisée en ce que la doublure (16) étanche à l'eau est recouverte d'une couche de protection (19) extérieure en tissu, par exemple en tissu de fibres polyamides ou en tissu de fibres polyester, le produit d'étanchéité (24) traversant la couche de protection (19) en tissu, en s'appliquant tout contre la doublure (16) étanche à l'eau et entourant de manière étanche à l'eau les fils, de préférence les monofilaments, du tissu (19) et en outre, les fils du tissu (19) ne conduisant pas l'eau.

35. Chaussure selon l'une des revendications 1 à 34, caractérisée en ce que la doublure (16) pratiquement étanche à l'eau est perméable à la vapeur.

36. Chaussure selon la revendication 35, caractérisée en ce que la doublure (16), pratiquement étanche à l'eau, comprend une feuille de polytétrafluoréthylène étirée, une membrane de polyester ou une couche de polyuréthanne microporeuse.

37. Chaussure selon l'une des revendications 1 à 36, caractérisée en ce que la doublure (16), étanche à l'eau, s'étend jusque dans la zone du bord d'entrée de la chaussure.

38. Chaussure selon l'une des revendications 1 à 37, caractérisée en ce qu'elle est conçue comme une chaussure à tige haute, en particulier comme une botte de sport ou de marche.

39. Chaussure selon l'une des revendications 1 à 37, caractérisée en ce qu'elle est conçue comme une chaussure basse.

40. Procédé de fabrication d'une chaussure, comportant une tige (12) assemblée à la première semelle (10), une construction de semelle (14) assemblée à la tige (12) et une doublure (16) à peu près étanche à l'eau, dans laquelle la tige (12) est réalisée dans une matière (12a) de plus grande perméabilité à l'eau et est réalisée d'un seul tenant avec une bande de bordure (12b), constituée d'une matière dont la perméabilité à l'eau est plus faible, ou nulle, dans laquelle en outre la bande de bordure (12b) est assemblée à la première (10), dans laquelle en outre la bande de bordure (12b) s'applique de manière étanche à l'eau contre la doublure (16), avec interposition d'un produit d'étanchéité (24) et dans laquelle la construction de semelle (14) présente au moins une couche étanche à l'eau en soi qui est assemblée, de manière étanche à l'eau, avec la bande de bordure (12b), caractérisé, en ce qu'on prévoit la bande de bordure (12b), dans une matière non perméable à l'eau, sur la matière (12a) de la tige, en ce qu'on applique entre la bande de bordure (12b) et la doublure (16) étanche à l'eau, le produit d'étanchéité (24) sous forme pâteuse ou liquide, en ce qu'on fixe la bande de bordure (12b) sur la première (10) et en ce qu'enfin on met en place la construction de semelle (14) étanche à l'eau.

41. Procédé selon la revendication 40, caractérisé en ce qu'avant d'appliquer le produit d'étanchéité (24) entre la doublure (16) étanche à l'eau d'une part et la bande de bordure (12b) et éventuellement la matière (12a) de la tige d'autre part, on prévoit une ligne de collage (25) et on applique le produit d'étanchéité (24a) dans la fente (29), limitée par cette ligne de collage (25).

42. Procédé selon l'une des revendications 40 ou 41, caractérisé en ce qu'on assemble la bande de bordure (12b) à la matière (12a) de la tige.

43. Procédé selon l'une des revendications 40 ou 41, caractérisé en ce qu'on forme la bande de bordure (12b), par imprégnation, dans une partie intégrante de la matière (12a) de la tige.

Fig.1a

12a

12b

12b3

12b2

12b1

Fig.1

27  19

12

12a  16

21  18

14a  25

20

24  22  10

12b

26

14

Fig.1b

12a

12b

Fig. 2

Fig. 3

Fig.4

Fig.5

Fig.6

Fig.7

# Fig. 8

# Fig. 9

# Fig. 10

# Fig. 11